Europäisches Patentamt

European Patent Office

Office européen des brevets

(11) Publication number: **0 443 690 A1**

# EUROPEAN PATENT APPLICATION

(21) Application number: **91200374.6**

(22) Date of filing: **20.02.91**

(51) Int. Cl.5: **B62K 25/00, B62K 25/16**

(30) Priority: **21.02.90 NL 9000420**

(43) Date of publication of application:
**28.08.91 Bulletin 91/35**

(84) Designated Contracting States:
**DE FR GB IT NL**

(71) Applicant: **Peters, Willem**
**Bonenkampstraat 8**
**NL-6551 ZE Weert(NL)**

(72) Inventor: **Verkuylen, Adrianus Henricus**
**Ignatius Maria**
**30, Kastanjelaan**
**NL-6581 PX Malden(NL)**
Inventor: **Oosterhoff, Hans**
**28, Robijn**
**NL-2651 SW Berkel(NL)**

(74) Representative: **Timmers, Cornelis Herman**
**Johannes et al**
**EXTERPATENT B.V. P.O. Box 90649**
**NL-2509 LP 's-Gravenhage(NL)**

(54) **Front wheel suspension system for motorcycles and motorcycle provided with such a system.**

(57) A front wheel suspension system for motorcycles comprising elements (1, 2) being spring-mounted to one another and being associated with the front wheel (4) on the one side and with the chassis (9) of the motorcycle on the other side, in which the spring-mounted elements are constituted, on the one side, by a single support arm (2) being connected to the said chassis and extending along only one side of the front wheel and being provided with straight guide ways (5), and, on the other side, by a shift piece (1) being rotatably connected to the hub (12) of the front wheel (4) and being also provided with straight guide ways, the said guide ways of both the support arm and the shift piece co-operating with each other, shock damper means (7) being connected to the front wheel through the shift piece on the one side and to the support arm on the other side, in which at least one reaction arm (8, 8') is provided which arm is rigidly connected to the chassis of the motorcycle on the one side and pivotally (10, 10') connected to the lower region of the support arm being connected to the ball head on the other side. The invention relates also to a motorcycle being provided with the said front wheel suspension system.

FIG. 3

The present invention relates to a front wheel suspension system for motorcycles comprising elements being spring-mounted to one another and being associated with the front wheel on the one side and with the chassis of the motorcycle on the other side, in which the spring-mounted elements are constituted, on the one side, by a single support arm being connected to the said chassis and extending along only one side of the front wheel and being provided with straight guide ways, and, on the other side, by a shift piece being rotatably connected to the hub of the front wheel and

being also provided with straight guide ways, the said guide ways of both the support arm and the shift piece co-operating with each other, shock damper means being connected to the front wheel through the shift piece on the one side and to the support arm on the other side.

A front wheel suspension system of the above mentioned type is disclosed in the Dutch Patent Application nr. 8701364 filed on June 12, 1987 in the name of Applicant.

From experiments with that known front wheel suspension system it has appeared that especially with heavy motorcycles, and especially on braking, the ball head and the support arm of the motorcycle are subject to important bending forces.

The object of the present invention is to obviate the said disadvantage. To this end according to the present invention the front wheel suspension system of the above mentioned type is characterised in that at least one reaction arm is provided which arm is rigidly connected to the chassis of the motorcycle on the one side and pivotally connected to the lower region of the support arm being connected to the ball head on the other side.

Through this measure the advantage is obtained that the bending forces being exerted on the ball head and the support arm are absorbed by the reaction arm so that the wheel suspension system considerably is less sensitive to bending forces and an optimum distribution of the forces is achieved. As the reaction arm according to the invention will stand still on driving with the motorcycle, moreover, the advantage is obtained that the total weight of the front wheel parts springing together and having to follow the road deck will be kept as low as possible which means that the relatively low unsprung weight will be able to follow the irregularities of the road deck very precisely.

It should be noted that reaction arms being intended to absorb the forces exerted on the front wheel suspension system are known per se. However, such known reaction arms are moving together with the front wheel so that there will be more unsprung weight which, owing to the heavier total mass of the parts thereof, cannot follow the irregularities of the road deck precisely.

In a preferred embodiment of the front wheel suspension system according to the present invention the pivot point pivotally connecting the reaction arm to the support arm forms a line with the heart of the ball head bearing said line being in the median plane of the wheel. This measure offers the advantage that thereby a neutral steering behaviour is achieved.

Preferably the reaction arm - as seen from above - has a form being bent in such a way that the reaction arm will allow a deflection of the front wheel of at least 20°.

In another preferred embodiment of the front wheel suspension system according to the present invention two reaction arms are pivotally connected to the support arm while the two pivot points on the support arm are both in the median plane of the wheel, especially within the periphery of that wheel. In this embodiment preferably the two reaction arms are united to a single integral part and both reaction arms will take up substantially all loads on the front wheel shaft, the ball head bearing acting thereby as a support bearing supporting the forces being exerted on the steering device.

The present invention also relates to a motorcycle which has been provided with a front wheel suspension system according to the present invention.

By way of example some preferred embodiments of the front wheel suspension system according to the present invention will be explained in further detail with reference to the accompanying drawings, in which :

Fig. 1 is a side view of a motorcycle being provided with a front wheel suspension system according to the rpesent invention;

Fig. 2 is a front view of the suspension system shown in figure 1 according to the line A-A in figure 1;

Fig. 3 is a side view of the system of figure 2;

Fig. 4 is a side view of a motorcycle having a modified front wheel suspension system according to the present invention;

Fig. 5 is a front view of the suspension system shown in figure 4 according the line B-B in figure 4; and

Fig. 6 is a side view of the suspension system of figure 5.

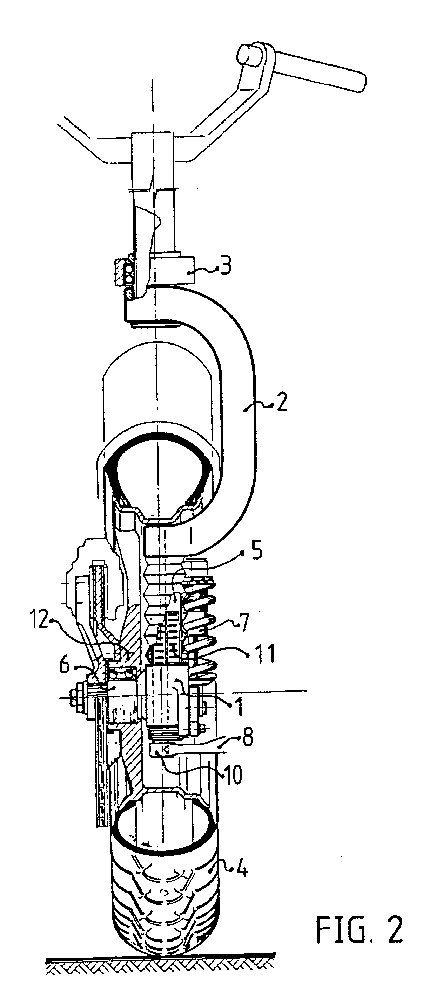

As shown in the drawings the front wheel suspension system according to the present invention comprises essentially a pair of elements which are spring-mounted one to another and are constituted by a shift piece 1 and a single support arm 2. The support arm 2 being connected to the ball head 3 of the motorcycle has - as seen in front view, see figure 2 - a form being bent in such a way that the support arm 2 extends along only one side of the front wheel 4 , said support arm being provided with guide means which in the example of the embodiment shown are constituted by straight guide ways 5 having substantially the form of a V in cross section and being substantially symmetric with respect to the the shaft 6 of the front wheel 4. The shaft 6 of the front wheel forms together with the shift piece 1 one single piece. On the shaft 6 a wheel bearing is provided that is disposed in the hub 12 of the wheel. The shift piece 1 is also provided with straight guide ways co-operating with the guide ways 5 of the support arm 2. In the examples of the embodiments shown needle bearings 11 are inserted between the guide ways of both the support arm and the shift piece.

Shock damper means 7 of a type being known per se is fixed to the the front wheel 4 through the shift piece 1 on the one side and to the support arm 2 on the other side.

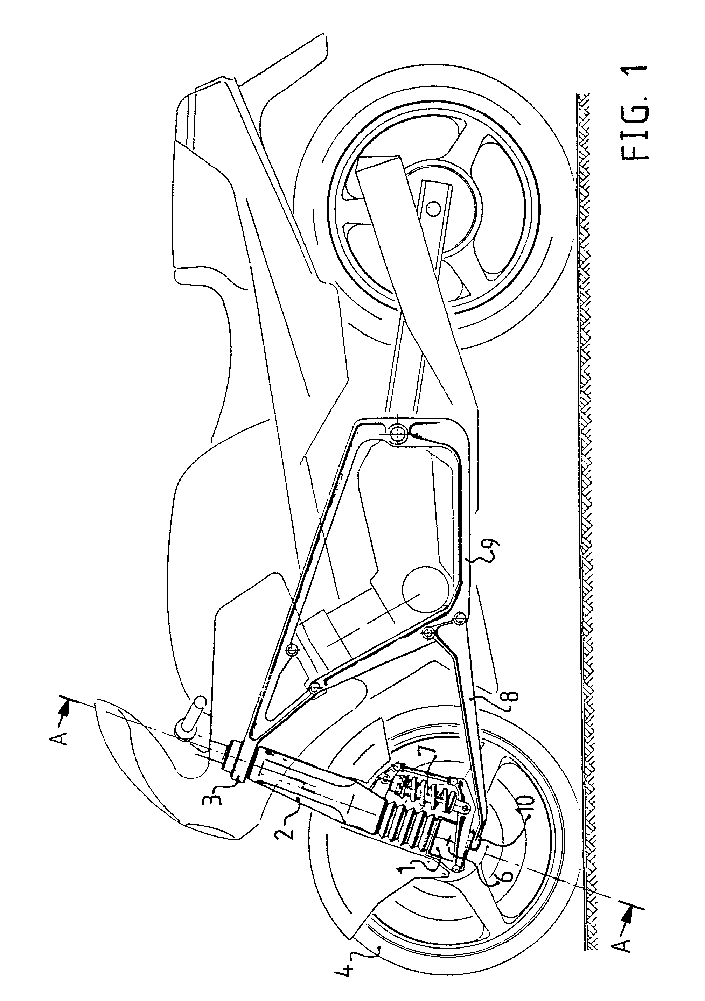

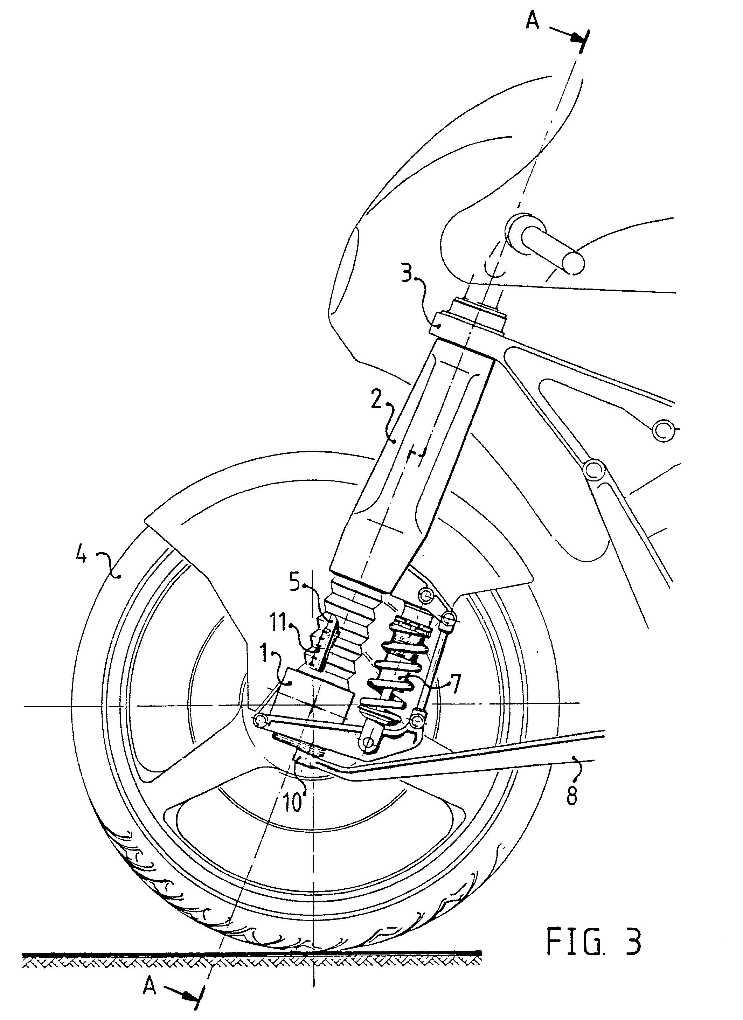

As shown in the figures 1 to 3, according to the present invention a reaction arm 8 is fixedly connected to the chassis 9 of the motorcycle on the one side and pivotally connected to the lower region of the support arm 2 through a pivot point 10 on the other side. This reaction arm 8 remaining itself stand still serves to absorb the bending forces being exerted on the ball head 3 and the support arm 2 of the motorcycle, so that the front wheel suspension system is substantially insensitive to bending forces and an optimum distribution of the forces is achieved. The pivot point 10 pivotally connecting the reaction arm 8 to the support arm 2 lies in the median plane of the front wheel 4. As seen from above the reaction arm has a form being bent in such a way that the front wheel will be able to perform a deflection of at least 20°.

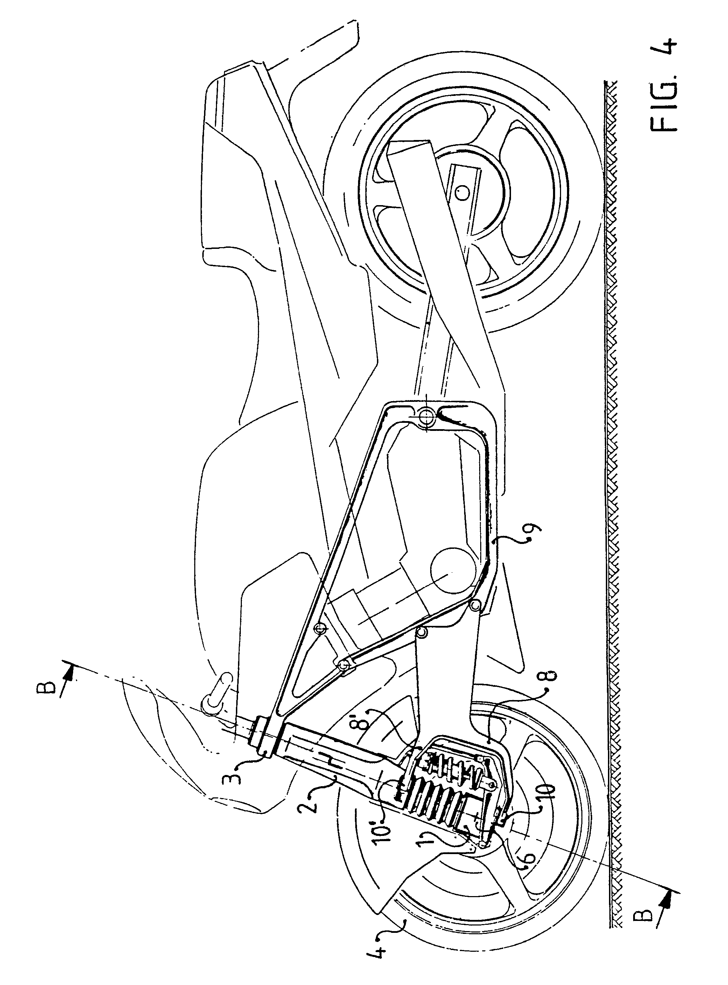

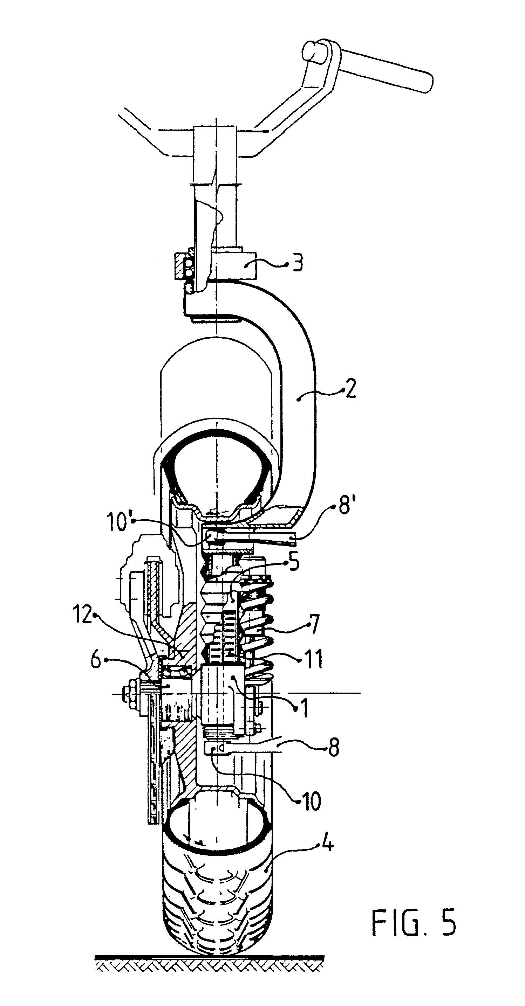

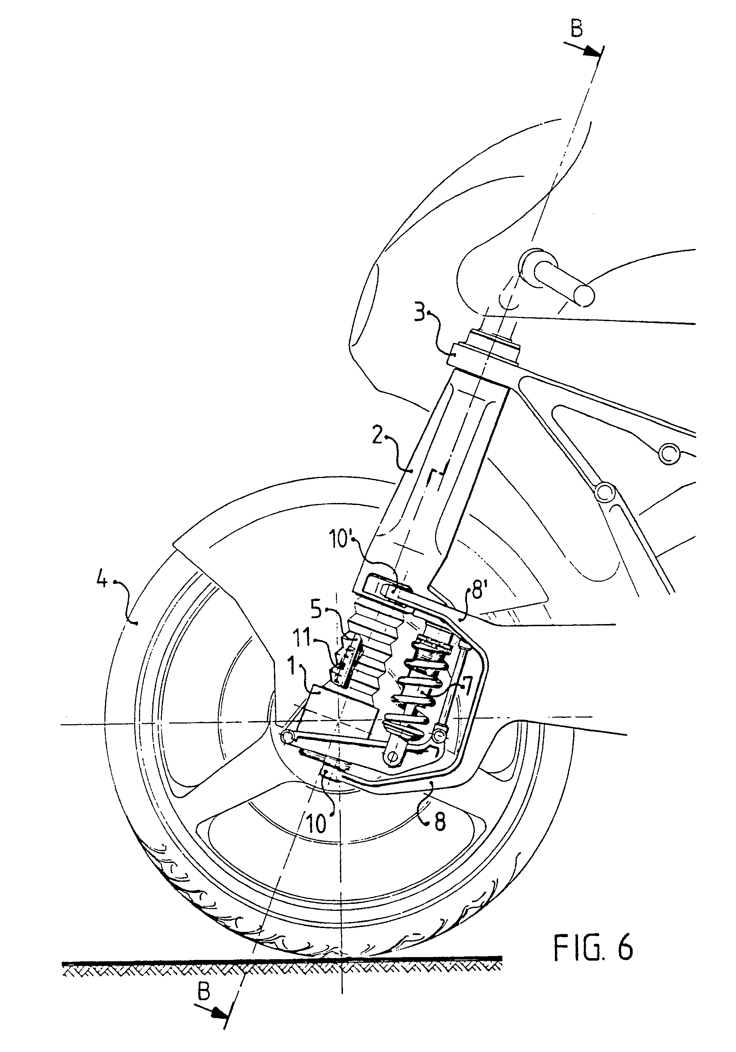

In a modified embodiment of the front wheel suspension system shown in the figures 4 to 6 two reaction arms 8, 8' are pivotally connected to the support arm 2 on the one side and fixedly connected to the chassis 9 on the other side. The two pivot points 10, 10' pivotally connecting the reaction arms 8, 8' to the support arm 2 are both in the median plane of the front wheel, especially within the periphery of that wheel.

In the embodiment shown the two reaction arms 8, 8' are unified to one single element being fixedly connected to the chassis 9 of the motorcycle on the one side and pivotally (pivot points 10, 10') connected to the support arm 2.

In a usual manner a hub is provided on the shaft of the front wheel said hub forming an integral part with the wheel and is fixed on the shaft by means of a wheelnut. The constructive details thereof as well as details of a usual brake disk are not shown further as they form no part of the present invention.

## Claims

1. A front wheel suspension system for motorcycles comprising elements being spring-mounted to one another and being associated with the front wheel on the one side and with the chassis of the motorcycle on the other side, in which the spring-mounted elements are constituted, on the one side, by a single support arm being connected to the said chassis and extending along only one side of the front wheel and being provided with straight guide ways, and, on the other side, by a shift piece being rotatably connected to the hub of the front wheel and being also provided with straight guide ways, the said guide ways of both the support arm and the shift piece co-operating with each other, shock damper means being connected to the front wheel through the shift piece on the one side and to the support arm on the other side, characterised in that at least one reaction arm is provided which arm is rigidly connected to the chassis of the motorcycle on the one side and pivotally connected to the lower region of the support arm being connected to the ball head on the other side.

2. A front wheel suspension system as claimed in claim 1, characterised in that the pivot point pivotally connecting the reaction arm to the support arm lies in the median plane of the wheel.

3. A front wheel suspension system as claimed in claim 1 or 2, characterised in that the reaction arm - as seen from above - has a form being bent in such a way that the reaction arm will allow a deflection of the front wheel of at least 20°.

4. A front wheel suspension system as claimed in one of the claims 1 to 3, characterised in that two reaction arms are pivotally connected to the support arm while the two pivot points on the support arm are both in the median plane of the wheel, especially within the periphery of that wheel.

5. A front wheel suspension system as claimed in claim 4, characterised in that the two reaction arms are united to one single integral part.

6. A motorcycle being provided with a front wheel suspension system according to one of the claims 1 to 5.

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 294 866  (WHITE POWER PRODUCTIONS B.V.)<br>* the whole document * | 1-3,6 | B 62 K 25/00<br>B 62 K 25/16 |
| Y,A | EP-A-0 238 768  (ELF FRANCE S.A.)<br>* column 8, line 21 - column 9, line 18; figures 1-6 * | 1-3,6,4 | |
| A | DE-A-3 723 107  (ELF FRANCE S.A.)<br>* the whole document * | 1-4,6 | |
| A | US-A-4 526 249  (J.PARKER)<br>* column 4, line 59 - column 6, line 68; figures 1-4 * | 1-4,6 | |
| A | FR-A-2 599 705  (HONDA GIKEN KOGYO K.K.)<br>* the whole document * | 1-4,6 | |
| A | GB-A-2 015 949  (A.DE CORTANZE)<br>* the whole document * | 1-4,6 | |
| A | GB-A-5 559 75  (VINCENT H.R.D. CO.LTD.)<br>* page 3, line 125 - page 4, line 44; figures 6, 7 * | 1-6 | |

TECHNICAL FIELDS
SEARCHED (Int. Cl.5)

B 62 K

The present search report has been drawn up for all claims

| Place of search | Date of completion of search | Examiner |
|---|---|---|
| The Hague | 17 May 91 | CZAJKOWSKI A.R. |

CATEGORY OF CITED DOCUMENTS

X: particularly relevant if taken alone
Y: particularly relevant if combined with another
document of the same catagory
A: technological background
O: non-written disclosure
P: intermediate document
T: theory or principle underlying the invention

E: earlier patent document, but published on, or after
the filing date
D: document cited in the application
L: document cited for other reasons

&: member of the same patent family, corresponding
document